# EUROPÄISCHE PATENTANMELDUNG

(11) **EP 4 663 984 A1**
(43) Veröffentlichungstag der Anmeldung: **17.12.2025**
(21) Anmeldenummer: 25182765.5
(22) Anmeldetag: 13.06.2025
(51) Int. Cl.: F16K 7/12, F16K 27/02, F16K 7/16

(54) **VENTILKÖRPER, PROZESSVENTIL, INLINER, BAUKASTEN**

(30) Priorität: 14.06.2024 DE 102024116707
(71) Anmelder: GEMÜ Gebr. Müller Apparatebau GmbH & Co. Kommanditgesellschaft, 74653 Ingelfingen (DE)
(72) Erfinder: Baumgärtner, Michael, 74677 Dörzbach (DE); Falkenberger, Jochen, 97980 Bad Mergentheim (DE); Wegert, Axel, 74196 Neuenstadt am Kocher (DE); Dietrich, Yvonne, 74632 Neuenstein (DE)
(74) Vertreter: DREISS Patentanwälte PartG mbB

(57) **Zusammenfassung**

Die Erfindung betrifft einen Ventilkörper (10) für durchströmende Fluide mit einem das Fluid führenden Inliner (12) und mit einem separat zum Inliner (12) ausgebildeten und den Inliner (12) umgebenden Ventilgehäuse (14), wobei der Inliner (12) umfasst einen ersten Fluidanschluss (16), einen dem ersten Fluidanschluss (16) gegenüberliegenden zweiten Fluidanschluss (18), und eine zwischen dem ersten Fluidanschluss (16) und dem zweiten Fluidanschluss (18), entlang einer Strömungsrichtung (20) erstreckende Durchgangsleitung (22), wobei das Ventilgehäuse (14) umfasst wenigstens ein erstes Gehäuseteil (30), und wenigstens ein separat zum ersten Gehäuseteil (30) ausgebildetes zweites Gehäuseteil (32, 32A, 32B), wobei das wenigstens eine erste Gehäuseteil (30) und das wenigstens eine zweite Gehäuseteil (32, 32A, 32B) lösbar miteinander verbunden sind.

## Beschreibung

Die Erfindung betrifft einen Ventilkörper für durchströmende, insbesondere aggressive, Fluide und ein Prozessventil.

Im Bereich der Chip-Herstellung kommen zum Fördern von chemisch aggressiv Fluiden Kunststoffventile zum Einsatz. Aus der EP 0 589 258 A1 ist ein Kunststoffventil mit einem Innenkörper und einem Außenkörper bekannt. Der Innenkörper wird dabei in einer Form aus einem chemisch beständigen Kunststoff gespritzt und anschließend wird der Außenkörper aus einem hochfesten Kunststoff aufgespritzt. Weder der Innenkörper, noch der Außenkörper sind voneinander lösbar.

Der Erfindung liegt die Aufgabe zugrunde, einen Ventilkörper bereitzustellen, welcher kleiner baut, leichter und wiederverwendbar ist.

Die der Erfindung zugrundeliegende Aufgabe wird gelöst durch einen Ventilkörper mit den Merkmalen des Anspruchs 1. Der Ventilkörper weist einen das Fluid führenden Inliner und ein separat zum Inliner ausgebildetes und den Inliner umgebendes Ventilgehäuse auf. Der Inliner umfasst einen ersten Fluidanschluss, einen dem ersten Fluidanschluss gegenüberliegenden zweiten Fluidanschluss, und eine zwischen dem ersten Fluidanschluss und dem zweiten Fluidanschluss, insbesondere entlang einer Strömungsrichtung, erstreckende Durchgangsleitung. Das Ventilgehäuse umfasst wenigstens ein erstes Gehäuseteil und wenigstens ein separat zum ersten Gehäuseteil ausgebildetes zweites Gehäuseteil, wobei das wenigstens eine erste Gehäuseteil und das wenigstens eine zweite Gehäuseteil lösbar miteinander verbunden sind.

Aufgrund der Mehrteiligkeit kann der Ventilkörper kleiner und leichter ausgebildet sein. Ferner ist der Ventilkörper durch die lösbare Verbindung des ersten Gehäuseteils und zweiten Gehäuseteils wiederverwendbar. Sollte es zu einem Schaden oder Verschleiß am Inliner und/oder am Ventilgehäuse, insbesondere am ersten Gehäuseteil und/oder am zweiten Gehäuseteil, kann das beschädigte bzw. verschlissene Teil ausgetauscht werden und die restlichen Teil können weiterverwendet werden. Damit ist eine kostengünstige Instandhaltung des Ventilkörpers sichergestellt.

Vorzugsweise ist der Inliner und das Ventilgehäuse lösbar miteinander verbunden.

Eine vorteilhafte Ausführungsform der Erfindung sieht vor, dass der Inliner aus einem hochbeständigen und/oder chemisch beständigen Material, insbesondere einem Kunststoff und/oder einem Fluorkunststoff, vorzugsweise PTFE, PFA, PVDCF, PEEK, FEP, ECTFE und/oder PP, hergestellt ist. Damit ist ein langlebiger Ventilkörper sichergestellt. Aufgrund der Mehrteiligkeit des Ventilkörpers kann der Einsatz von Fluorwerkstoffen signifikant reduziert werden.

Eine weitere vorteilhafte Ausführungsform der Erfindung sieht vor, dass das Ventilgehäuse aus einem mechanisch hochfesten Material, insbesondere einem Kunststoff, vorzugsweise einem faserverstärkten Kunststoff, PEEK, PA, PC, PET, PPS und/oder PMMA, hergestellt ist. Damit ist ein langlebiger Ventilkörper sichergestellt. Der Inliner wird vorzugsweise im Ventilgehäuse abgestützt. Aufgrund der Mehrteiligkeit des Ventilkörpers und der gezielten Wahl der Materialien kann der Ventilkörper signifikant kleiner und leichter bauen.

Es ist vorteilhaft, wenn das wenigstens eine erste Gehäuseteil und das wenigstens eine zweite Gehäuseteil mittels einer Clipsverbindung und/oder einer Schraubverbindung und/oder einem Klemmverbindung miteinander lösbar verbunden sind. Folglich kann eine einfache, leichte und sichere Verbindung zwischen dem ersten Gehäuseteil und dem zweiten Gehäuseteil bereitgestellt werden.

Der erste Gehäuseteil und der zweite Gehäuseteil bilden einen Hohlraum aus, in welchem der Inliner im Betrieb angeordnet ist. Vor dem Verbinden des ersten Gehäuseteils und des zweiten Gehäuseteils wird der Inliner in den Hohlraum eingesetzt. Durch die Verbindung des ersten Gehäuseteils und des zweiten Gehäuseteils wird vorzugsweise ebenfalls der Inliner und das Ventilgehäuse, insbesondere lösbar, miteinander verbunden. Vorzugsweise umgibt das Ventilgehäuse den Inliner um dessen gesamten Umfang.

Bei einer Clipsverbindung weist vorzugsweise das erste Gehäuseteil wenigstens einen männlichen bzw. hervorstehenden ersten Clipsabschnitt und das zweite Gehäuseteil wenigstens einen weiblichen bzw. zurückstehenden zweiten Clipsabschnitt auf. Zur Clipsverbindung wirken der erste Clipsabschnitt und der zweiten Clipsabschnitt zusammen. Es ist zudem denkbar, dass das erste Gehäuseteil wenigstens einen ersten Clipsabschnitt und wenigstens einen zweiten Clipsabschnitt sowie das zweite Gehäuseteil wenigstens einen ersten Clipsabschnitt und wenigstens einen zweiten Clipsabschnitt aufweist. In dem Fall wirkt ein erster Clipsabschnitt des ersten Gehäuseteils mit einem zweiten Clipsabschnitt des zweiten Gehäuseteils und/oder ein zweiter Clipsabschnitt des ersten Gehäuseteils mit einem ersten Clipsabschnitt des zweiten Gehäuseteils zusammen.

Bei einer Schraubverbindung weist das erste Gehäuseteil und/oder das zweite Gehäuseteil Bohrungen, welche insbesondere senkrecht zur ersten Ebene und/oder zweiten Ebene und/oder dritten Ebene, verlaufen. Zum Verbinden des ersten Gehäuseteils und/oder des zweiten Gehäuseteils kommen Befestigungsmittel, insbesondere Schrauben, zum Einsatz.

Es ist ferner vorteilhaft, wenn das Ventilgehäuse einen Gehäusegrundkörper und wenigstens einen, insbesondere zwei, Montageanschlüsse zur mechanischen Verbindung mit weiteren Bauteilen aufweist. Demnach ist der Ventilkörper einfach und sicher montierbar. Der wenigstens eine Montageanschluss kann vorzugsweise einen Gewindeabschnitt, insbesondere ein Außengewinde, aufweisen.

Vorzugsweise weist der Inliner einen Absperrabschnitt und wenigstens einen, insbesondere zwei, Rohrabschnitte auf. Die zwei Rohrabschnitte münden innen in den Absperrabschnitt und außen in die Fluidanschlüsse. Im Absperrabschnitt kann vorzugsweise die Durchgangsleitung geöffnet und verschlossen werden.

Eine vorteilhafte Weiterentwicklung sieht vor, dass das erste Gehäuseteil und das zweite Gehäuseteil parallel zu oder entlang einer ersten Ebene voneinander getrennt sind, wobei sich die erste Ebene parallel zu einer, insbesondere parallel zur Strömungsrichtung verlaufenden, x-Achse und einer senkrecht zur x-Achse verlaufenden y-Achse erstreckt. Demnach sind das erste Gehäuseteil und das zweite Gehäuseteil senkrecht zur ersten Ebene entlang einer z-Achse einfach fügbar. Das erste Gehäuseteil und das zweite Gehäuseteil weisen vorzugsweise eine erste Kontaktfläche und eine zweite Kontaktfläche auf, welche vorzugsweise im Betrieb entlang der ersten Ebene aneinander anliegen.

Eine weitere vorteilhafte Weiterentwicklung sieht vor, dass das erste Gehäuseteil und das zweite Gehäuseteil parallel zu oder entlang einer zweiten Ebene voneinander getrennt sind, wobei sich die zweite Ebene parallel zu einer, insbesondere parallel zur Strömungsrichtung verlaufenden, x-Achse und einer senkrecht zur x-Achse verlaufenden z-Achse erstreckt. Demnach sind das erste Gehäuseteil und das zweite Gehäuseteil senkrecht zur zweiten Ebene entlang einer y-Achse einfach fügbar. Das erste Gehäuseteil und das zweite Gehäuseteil weisen vorzugsweise eine erste Kontaktfläche und eine zweite Kontaktfläche auf, welche vorzugsweise im Betrieb entlang der zweiten Ebene aneinander anliegen.

Eine weitere vorteilhafte Weiterentwicklung sieht vor, dass das erste Gehäuseteil und das zweite Gehäuseteil parallel zu oder entlang einer dritten Ebene voneinander getrennt sind, wobei sich die dritte Ebene parallel zu einer, insbesondere senkrecht zur Strömungsrichtung verlaufenden, y-Achse und einer senkrecht zur y-Achse verlaufenden z-Achse erstreckt. Demnach sind das erste Gehäuseteil und das zweite Gehäuseteil senkrecht zur dritten Ebene entlang einer, insbesondere parallel zur Strömungsrichtung verlaufenden, x-Achse einfach fügbar. Das erste Gehäuseteil und das zweite Gehäuseteil weisen vorzugsweise eine erste Kontaktfläche und eine zweite Kontaktfläche auf, welche vorzugsweise im Betrieb entlang der dritten Ebene aneinander anliegen.

Es ist denkbar, dass das erste Gehäuseteil und das zweite Gehäuseteil, insbesondere deren Kontaktflächen, stufenförmig ausgebildet sind, sodass deren Kontaktflächen zwar parallel zu den Ebenen, insbesondere der ersten Ebene, der zweiten Ebene oder der dritten Ebene, verlaufen, aber nicht oder nur abschnittsweise entlang der Ebenen.

Es ist vorteilhaft, wenn die Clipsabschnitte jeweils an den Kontaktflächen der Gehäuseteile angeordnet sind.

Vorzugsweise sind das erste Gehäuseteil und das zweite Gehäuseteil identisch zueinander ausgebildet. Demnach sind die Gehäuseteile als Gleichteile ausgebildet und folglich einfacher und günstiger herzustellen.

Es ist vorteilhaft, wenn das Ventilgehäuse einen ersten Montageanschluss und einen zweiten Montageanschluss aufweist. Vorzugsweise weist das wenigstens eine erste Gehäuseteil zwei erste Anschlussteile und das wenigstens eine zweite Gehäuseteil zwei zweite Anschlussteile auf. Im Betrieb werden vorzugsweise der erste Montageanschluss und der zweite Montageanschluss jeweils durch ein erstes Anschlussteil und ein zweites Anschlussteil gebildet. Diese Ausführungsform kommt insbesondere dann zum Einsatz, wenn die Gehäuseteile entlang der ersten Ebene oder der zweiten Ebene getrennt sind.

Vorzugsweise sind die ersten Anschlussteile und die zweiten Anschlussteile identisch ausgebildet.

Es ist ferner vorteilhaft, wenn das erste Gehäuseteil einen Gehäusegrundkörper und zwei erste Anschlussstellen und das zweite Gehäuseteil einen Gehäusedeckel zum Aufsetzen auf den Gehäusegrundkörper und zwei zweite Anschlussstellen aufweist. Diese Ausführungsform kommt insbesondere dann zum Einsatz, wenn die Gehäuseteile parallel zur dritten Ebene getrennt sind. Vorzugsweise weisen die ersten und zweiten Anschlussstellen eine identische, parallel zur z-Achse verlaufende, Höhenerstreckung und der Gehäusegrundkörper und der Gehäusedeckel unterschiedliche Höhenerstreckungen auf.

Eine weitere vorteilhafte Weiterbildung sieht vor, dass das wenigstens eine erste Gehäuseteil ein Gehäusegrundkörper mit zwei Aufnahmen zur Aufnahme von Montageanschlüssen aufweist, und wobei das wenigstens eine zweite Gehäuseteil wenigstens einen, vorzugsweise zwei, im Betrieb in der Aufnahme aufgenommenen Montageanschluss aufweist. Folglich können die Montageanschlüsse, insbesondere deren Durchmesser und/oder deren Gewinde und/oder deren Länge, einfach an die umgebenden Bauteile angepasst werden.

Es ist vorteilhaft, wenn das Ventilgehäuse entlang der Strömungsrichtung zwischen dem ersten Fluidanschluss und dem zweiten Fluidanschluss angeordnet ist. Vorzugsweise steht das Ventilgehäuse, insbesondere die Montageanschlüsse, nicht gegenüber dem ersten Fluidanschluss und/oder dem zweiten Fluidanschluss entlang bzw. entgegen der Strömungsrichtung hervor. Damit ist vorzugsweise sichergestellt, dass der, insbesondere nicht chemisch beständige, Ventilkörper nicht das Fluid kontaktiert und/oder führt. Der Inliner ist vorzugsweise radial zur Strömungsrichtung zwischen der Durchgangsleitung und dem Ventilkörper, insbesondere entlang der gesamten parallel zur x-Achse verlaufenden Längserstreckung, angeordnet.

Es ist ferner vorteilhaft, wenn der Ventilkörper ferner eine senkrecht zur Durchgangsleitung, entlang einer Antriebachse verlaufende Ventilöffnung aufweist, welche durch ein Ventilelement, insbesondere eine Membran, abgedichtet ist. Das Ventilelement ist vorzugsweise entlang der Antriebsachse zwischen einer Öffnungsstellung zum fluidischen Verbinden und einer Schließstellung zum fluidischen Trennen des ersten Fluidanschlusses und des zweiten Fluidanschlusses verlagerbar. Die Antriebsachse verläuft vorzugsweise parallel zur z-Achse.

Vorzugsweise ist ein Sensor zum Erfassen eines in der Durchgangsleitung laufenden Fluidstroms im Ventilgehäuse vorgesehen. Der Sensor ist vorzugsweise in der Ventilöffnung angeordnet. Demnach ist der Fluidstrom erfassbar und regelbar. Der Sensor weist vorzugsweise eine Hauptsensorachse auf, wobei diese vorzugsweise parallel zur z-Achse und/oder zur Antriebsachse verläuft.

Die der Erfindung zugrundeliegende Aufgabe wird ebenfalls durch ein Prozessventil mit den Merkmalen des Anspruchs 16 gelöst. Das Prozessventil weist einen beschriebenen Ventilkörper und einen Ventilantrieb zum Verlagern eines im Ventilkörpers angeordneten Ventilelements, wie z.B. einer Membran oder eines Plug Diaphragma, entlang der z-Achse und/oder der Antriebsachse.

Es ist vorteilhaft, wenn der Ventilantrieb in einem Antriebsgehäuse angeordnet ist und wenn das wenigstens eine erste Gehäuseteil und das wenigstens eine zweite Gehäuseteil mittels des Antriebsgehäuses miteinander verbunden sind. Folglich können die Verbindungselemente für das Antriebsgehäuse gleichzeitig auch für das Ventilgehäuse Verwendung finden.

Es ist ferner vorteilhaft, wenn das Ventilelement einen radialen Dichtabschnitt zum Dichten der Durchgangsleitung gegenüber dem Ventilantrieb aufweist. Der radiale Dichtabschnitt kann vorzugsweise zwischen dem Ventilgehäuse und dem Antriebsgehäuse angeordnet, insbesondere verklemmt, sein. Es ist zudem vorteilhaft, wenn der Inliner im Absperrabschnitt wenigstens eine Materialausnehmung aufweist, sodass weiter Material des Inliners eingespart wird. Die Materialausnehmung ist vorzugsweise auf der dem Ventilantrieb abgewandten Unterseite des Inliners angeordnet. Der Inliner weist vorzugsweise ferner im Absperrabschnitt wenigstens eine Finne zur Versteifung auf. Die wenigstens eine Finne ist vorzugsweise an den Verlauf der Durchgangsleitung im Absperrabschnitt angeformt. Der Inliner weist vorzugsweise ferner eine ebene Auflagefläche auf, welche im Betrieb zur Auflage im Ventilgehäuse gelangt.

Eine vorteilhafte Weiterbildung der Erfindung sieht vor, dass das Ventilelement einen radialen Dichtabschnitt zum Dichten der Durchgangsleitung gegenüber dem Ventilantrieb aufweist. Der radiale Dichtabschnitt weist vorzugsweise eine parallel zur Antriebsachse und/oder senkrecht zur Strömungsrichtung verlaufenden Dichtbereich mit einer Dichtaußenfläche und einer Dichtinnenfläche. Der Dichtabschnitt ist vorzugsweise derart ausgebildet, dass im Betrieb das Fluid gegen die Dichtinnenfläche drängt und dabei die Dichtaußenfläche gegen eine Innenseite des Inliners drängt. Die dadurch bewirkte radiale Kraftkomponente stellt eine sichere Abdichtung dar. Eine axiale Vorspannung des Ventilelements zum Abdichten ist nicht erforderlich. Der radiale Dichtabschnitt ist zwischen dem Ventilgehäuse und dem Antriebsgehäuse angeordnet, vorzugsweise gehalten oder verklemmt.

Die der Erfindung zugrundeliegende Aufgabe wird ebenfalls gelöst durch einen Inliner für einen beschriebenen Ventilkörper mit den Merkmalen des Anspruchs 19. Der Inliner dient zur Anordnung in einem separat zum Inliner ausgebildeten Ventilgehäuse mit einem Absperrabschnitt, wenigstens einem Rohrabschnitt und mit wenigstens einer im Absperrabschnitt angeordneten radialen Dichtkante zum Zusammenwirken mit einem radialen Dichtabschnitt eines Ventilelements. Die Dichtkante ist vorzugsweise dabei zu einer Innenseite des Inliners beabstandet angeordnet. Demnach kann im Bereich der Innenseite des Inliners ein Verbindungselement für einen Antriebskörper angeordnet, insbesondere mittels Schrauben befestigt, werden. Vorzugsweise sind der Dichtabschnitt und die Dichtkante derart ausgebildet, dass im Betrieb der Dichtabschnitt die Dichtkante senkrecht zur Antriebsachse und/oder parallel zur Strömungsrichtung hintergreift. Der Dichtabschnitt ist vorzugsweise zwischen der Dichtkante und der Innenseite des Inliners angeordnet. Die Dichtinnenfläche ist vorzugsweise zur Dichtkante und/oder die Dichtaußenfläche ist vorzugsweise zur Innenseite des Inliners zugewandt.

Die der Erfindung zugrundeliegende Aufgabe wird ebenfalls durch einen Baukasten mit den Merkmalen des Anspruchs 20 gelöst. Der Baukasten weist einen als erstes Gehäuseteil ausgebildeten Gehäusegrundkörper für einen Ventilkörper nach einem der Ansprüche 1 bis 15 und mehrere am Gehäusegrundkörper anordenbare, als zweite Gehäuseteile ausgebildete Montageanschlüssen auf. Die Montageanschlüsse weisen jeweils einen Gewindeabschnitt auf. Die Gewindedurchmesser der Gewindeabschnitte unterscheiden sich in deren Größe. Es ist ebenfalls denkbar, dass Montageanschlüsse ohne Gewindeabschnitte ausgebildet sind und/oder als eine Art Blindanschluss ausgebildet sind.

Weitere Einzelheiten und vorteilhafte Ausgestaltungen der Erfindung sind der nachfolgenden Beschreibung zu entnehmen, anhand derer Ausführungsbeispiele der Erfindung weiter beschrieben und erläutert sind.

Es zeigen:
- Fig. 1.: eine Explosionsansicht eines ersten Ventilkörpers;
- Fig. 2.: eine schematische Ansicht des ersten Ventilkörpers gemäß Fig. 1;
- Fig. 3.: eine Explosionsansicht eines zweiten Ventilkörpers;
- Fig. 4.: eine schematische Ansicht des zweiten Ventilkörpers gemäß Fig. 3;
- Fig. 5.: eine Explosionsansicht eines dritten Ventilkörpers;
- Fig. 6.: eine schematische Ansicht des dritten Ventilkörpers gemäß Fig. 5;
- Fig. 7.: eine weitere schematische Ansicht des dritten Ventilkörpers gemäß Fig. 5 mit einer Überwurfmutter;
- Fig. 8.: eine schematische Ansicht von zwei hintereinander angeordneten Ventilkörpern gemäß Fig. 5 mit einer Überwurfmutter;
- Fig. 9.: eine Explosionsansicht eines vierten Ventilkörpers;
- Fig. 10.: eine schematische Ansicht des vierten Ventilkörpers gemäß Fig. 9;
- Fig. 11.: eine schematische Oberansicht eines Inliners;
- Fig. 12.: eine schematische Unteransicht des Inliners gemäß Fig. 11;
- Fig. 13.: eine schematische Unteransicht des zweiten Ventilkörpers gemäß Fig. 3;
- Fig. 14.: eine Schnittansicht des zweiten Ventilkörpers gemäß Fig. 3 entlang der Befestigungsbohrungen;
- Fig. 15.: eine Schnittansicht eines Prozessventils; und
- Fig. 16.: eine Detailansicht des Prozessventils gemäß Fig. 15.

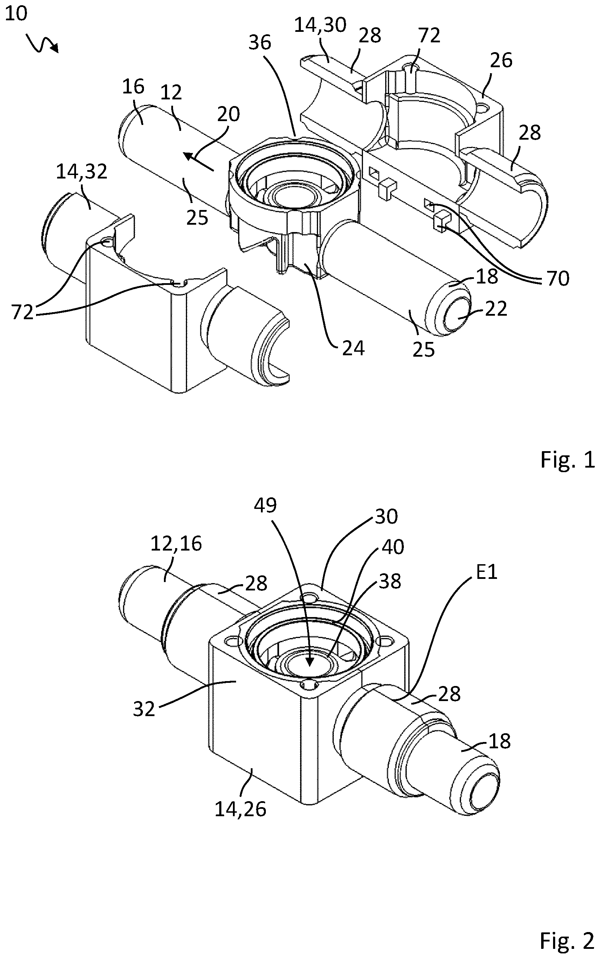

Gemäß Fig. 1 weist der Ventilkörper 10 eines Prozessventils 100 einen Fluid durchführenden Inliner 12 und ein separat zum Inliner 12 ausgebildetes und den Inliner 12 umgebendes Ventilgehäuse 14 auf.

Der Inliner 12 umfasst einen ersten Fluidanschluss 16 und einen dem ersten Fluidanschluss 16 gegenüberliegenden zweiten Fluidanschluss 18. Der erste Fluidanschluss 16 und der zweite Fluidanschluss 18 sind mittels einer entlang einer Strömungsrichtung 20 erstreckenden Durchgangsleitung 22 fluidisch miteinander verbunden. Zwischen dem ersten Fluidanschluss 16 und dem zweiten Fluidanschluss 18 weist der Inliner 12 einen Ventilabschnitt 24 auf, welcher mit einem Ventilelement zusammenwirkt. Die Fluidanschlüsse sind vorzugsweise als Rohrabschnitte 25 ausgebildet. Der Inliner 12 ist aus einem chemisch beständigen Material, insbesondere aus einem Fluorkunststoff, hergestellt.

Das Ventilgehäuse 14 weist einen Gehäusegrundkörper 26 und zwei jeweils einander gegenüberliegende Montageanschlüsse 28 auf, wobei die Montageanschlüsse 28 jeweils dem ersten Fluidanschluss 16 oder dem zweiten Fluidanschluss 18 zugewiesen sind und/oder Gewindeabschnitte zur Anbindung an angrenzende Anlagenkomponenten aufweisen. Die Montageanschlüsse 28 können sich insbesondere hinsichtlich des Gewindedurchmessers unterscheiden. Der Gehäusegrundkörper 26 weist vorzugsweise einen quadratischen Querschnitt auf und/oder ist quaderförmig oder würfelförmig ausgebildet. Das Ventilgehäuse 14 wird aus wenigstens einem ersten Gehäuseteil 30 und wenigstens einem zum ersten Gehäuseteil 30 separat ausgebildeten zweiten Gehäuseteil 32 gebildet. Das Ventilgehäuse 14 ist aus einem mechanisch hochfesten Kunststoff hergestellt.

Der Gehäusegrundkörper 26 umhaust bzw. umschließt wenigstens teilweise, insbesondere mit Ausnahme zu einem Antriebselement, den Ventilabschnitt 24. Die Montageanschlüsse 28 umhausen bzw. umschließen wenigstens teilweise die Fluidanschlüsse 16, 18.

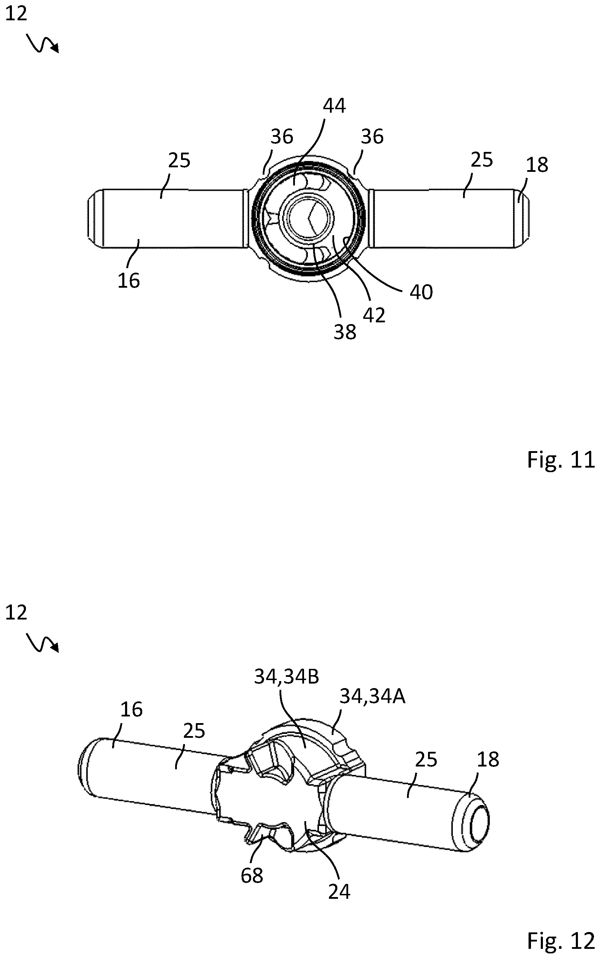

Der Ventilabschnitt 24 ist senkrecht zur Strömungsrichtung 20 im Querschnitt im Wesentlichen kreisrund ausgebildet. Der Ventilabschnitt 24 weist einen radial äußeren Rahmenabschnitt 34 mit einem zu einem Ventilelement zugewandten oberen Rahmenabschnitt 34A und einem von einem Ventilelement abgewandten unteren Rahmenabschnitt 34B auf. Der obere Rahmenabschnitt 34A weist vorzugsweise vier Ausnehmungen 36 auf, welche zur teilweise Aufnahme von Befestigungsmittel dienen. Der untere Rahmenabschnitt 34B ist gemäß Fig. 12 an die Durchgangsleitung 22 angeformt. Im Bereich des Ventilabschnitts 24 ist gemäß Fig. 11 ein inlinerseitiger Sperrabschnitt 38 vorgesehen, wobei der Sperrabschnitt 38 vorzugsweise kreisrund ausgebildet ist. Der Sperrabschnitt 38 wird von einem inlinerseitigen Ventilsitz 40 umgeben, wobei vorzugsweise der Ventilsitz 40 kreisrund ausgebildet ist und/oder senkrecht zur Strömungsrichtung 20 gegenüber dem Sperrabschnitt 38 beabstandet ausgebildet ist. Der erste Fluidanschluss 16 ist fluidisch mit einem Zwischenraum 42 zwischen dem Sperrabschnitt 38 und dem Ventilsitz 40 verbunden. Dazu weist die Durchgangsleitung 22 von dem ersten Fluidanschluss 16 kommend einen Rampenabschnitt 44 auf, welcher wenigstens im Wesentlichen bündig mit dem Sperrabschnitt 38 abschließt.

Im Betrieb des Prozessventils 100 strömt das Fluid von dem ersten Fluidanschluss 16 über dem Rampenabschnitt 44 in den Zwischenraum 42. In der Öffnungsstellung fließt das Fluid weiter über den Sperrabschnitt 38 hinweg zum zweiten Fluidanschluss 18. Der zweite Fluidanschluss 18 ist vorzugsweise mit einem Innenbereich des Sperrabschnitts 38 fluidisch verbunden.

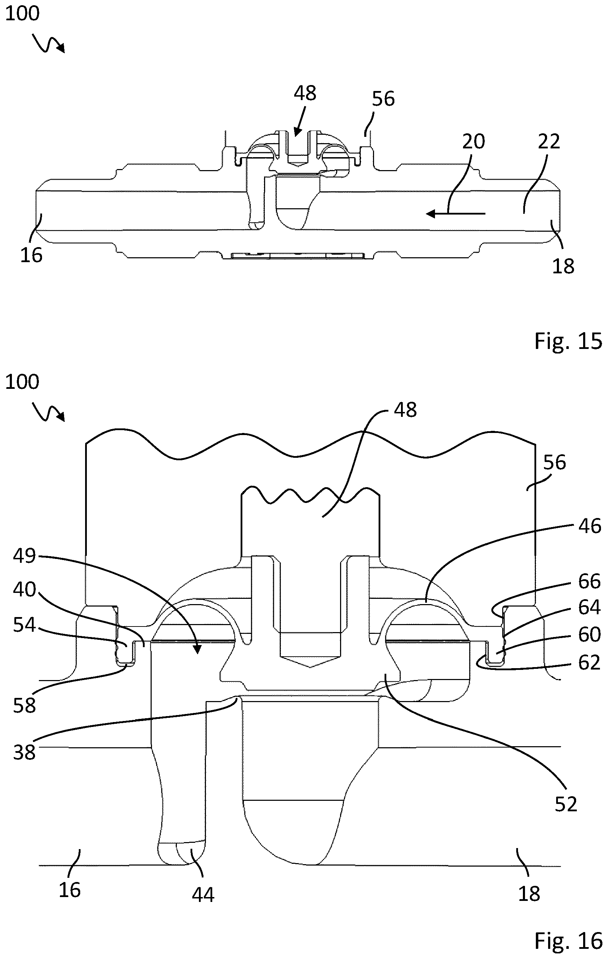

Zum Öffnen und Schließen des Prozessventils 100 ist gemäß Fig. 15 und 16 ein Ventilelement 46, insbesondere eine Plug Membran, vorgesehen, welches mittels eines Ventilantriebs 48 entlang einer senkrecht zur Strömungsrichtung 20 verlaufenden Antriebsachse 50 zwischen einer oberen Öffnungsstellung und einer unteren Schließstellung schaltbar ist. Im Sinne der Beschreibung ist mit der Richtungsangabe "oben" dem Ventilantrieb 48 zugewandt und der Richtungsangabe "unten" dem Ventilantrieb 48 abgewandt gemeint. Der Ventilantrieb 48 greift dabei im Betrieb durch eine Ventilöffnung 49 im Ventilkörper 10 am Inliner 12 an. Das Ventilelement 46 weist ein zentrales Dichtelement 52 zum Zusammenwirken mit dem Sperrabschnitt 38 und einen das Dichtelement 52 umgebenden Dichtabschnitt 54 zum Zusammenwirken mit dem Ventilsitz 40 zusammen. In der unteren Schließstellung liegt das Dichtelement 52 am Sperrabschnitt 38 an, sodass der erste Fluidanschluss 16 bzw. der Zwischenraum 42 nicht fluidisch mit dem zweiten Fluidanschluss 18 verbunden ist. In der oberen Öffnungsstellung ist das Dichtelement 52 zum Sperrabschnitt 38 beabstandet angeordnet.

Gemäß Fig. 16 ist ersichtlich, dass der Ventilsitz 40 und der Dichtabschnitt 54 als radiale Dichtung ausgebildet sind. Dazu wird das Ventilelement 46 mittels eines Antriebsgehäuses 56 des Ventilantriebs 48 am Ventilsitz 40 gehalten. Zwischen dem Rahmenabschnitt 34 und dem Ventilsitz 40 ist eine Dichtungsausnehmung 58 vorgesehen, welche senkrecht zur Antriebsachse 50 radial außen von dem Ventilsitz 40 eine Hinterschneidung bildet. Der Dichtabschnitt 54 weist einen insbesondere parallel zur Antriebsachse 50 verlaufenden Dichtsteg 60 auf, welcher in die Dichtungsausnehmung 58 eingreift. Der Dichtabschnitt 54, insbesondere der Dichtsteg 60, weist eine radial innere Dichtinnenfläche 62 und eine radial äußere Dichtaußenfläche 64 auf. Der Dichtabschnitt 54 ist vorzugsweise derart ausgebildet, dass im Betrieb das Fluid gegen die Dichtinnenfläche 62 drängt und dabei den Dichtsteg 60, insbesondere die Dichtaußenfläche 64, gegen eine Innenseite 66 des Inliners 12 drängt. Die dadurch bewirkte radiale Kraftkomponente stellt eine sichere Abdichtung dar, wobei mit steigendem Druck auch die Anpresskraft gegen die Innenseite 66 steigt. Eine axiale Vorspannung des Ventilelements 46 zum Abdichten ist nicht erforderlich. Zur weiteren Verbesserung der Dichtwirkung weist die Dichtaußenfläche 64 vorzugsweise gegenüber der Innenseite 66 ein Übermaß auf, sodass im Betrieb eine Presspassung vorliegt. Die Dichtaußenfläche 64 und/oder die Innenseite 66 weisen vorzugsweise Rillen auf, welche eine weitere Verbesserung der Dichtwirkung mit sich bringen. Das Ventilelement 46 und/oder der Inliner 12 sind vorzugsweise meanderförmig ausgebildet. Die radiale Dichtung ermöglicht, dass trotz der Mehrteiligkeit und der damit einhergehenden höheren Toleranzen ohne zusätzliche Spannmittel eine zuverlässige Dichtung sichergestellt werden kann.

Der Inliner 12 weist am unteren Rahmenabschnitt 34B Materialausnehmungen auf. Zum einen ist der untere Rahmenabschnitt 34B gegenüber dem oberen Rahmenabschnitt 34A zurückversetzt ausgebildet. Zudem weist der untere Rahmenabschnitt 34B neben der Anformung an die Durchgangsleitung 22, insbesondere an den Rampenabschnitt 44, wenigstens eine Finne 68 zum Abstützen des Inliners 12 im Gehäusegrundkörper 26 auf. Der untere Rahmenabschnitt 34B ist an seiner Unterseite eben ausgebildet, sodass der Inliner 12 eben im Gehäusegrundkörper 26 aufliegt. Die Anformung an die Durchgangsleitung 22 kann vorzugsweise dreiecksförmig ausgebildet sein und demnach eine Montagehilfe ausbilden.

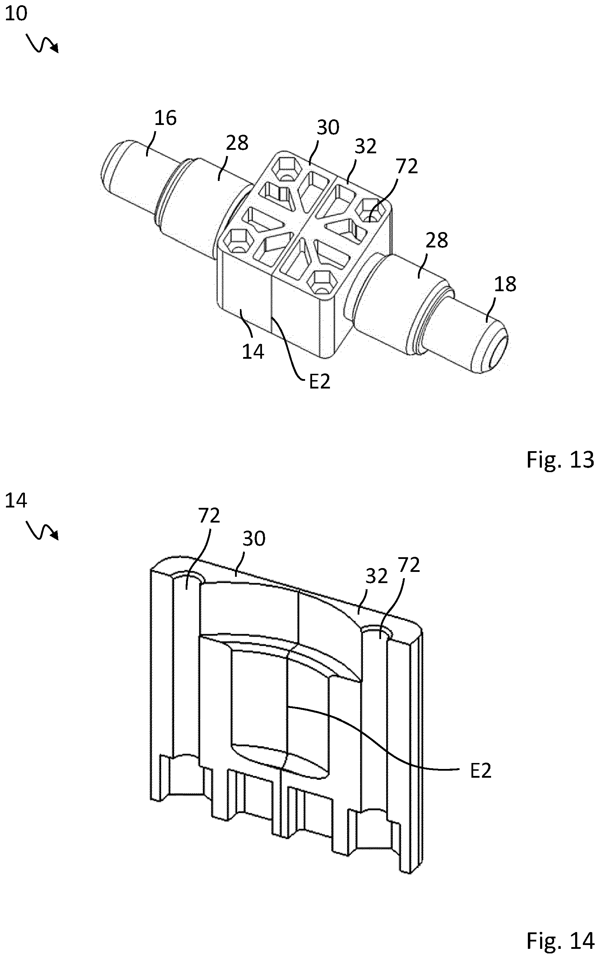

Gemäß Fig. 1 und 2 ist der Ventilkörper 10 entlang einer ersten Ebene E1 in den ersten Gehäuseteil 30 und in den zweiten Gehäuseteil 32 getrennt. Die erste Ebene E1 erstreckt sich parallel zu einer x-Achse und einer senkrecht zur x-Achse verlaufenden y-Achse. Die x-Achse erstreckt sich vorzugsweise parallel zur Durchgangsleitung 22. Die y-Achse erstreckt sich vorzugsweise parallel zur Antriebsachse 50. Zur Montage wird zunächst der Inliner 12 bereitgestellt und anschließend die Gehäuseteile 30, 32 entlang einer senkrecht zur x-Achse und y-Achse verlaufenden z-Achse gefügt. Vorzugsweise weisen die Gehäuseteile 30, 32 jeweils männliche bzw. weibliche Haltemittel 70 auf, welche beim Fügen ineinandergreifen. Die Haltemittel 70 sind vorzugsweise unterhalb des Inliners 12 angeordnet. Das Fügen der Gehäuseteile 30, 32 erfolgt vorzugsweise mittels einer Kippbewegung. Die Gehäuseteile 30, 32 sind vorzugsweise identisch und/oder korrespondierend zueinander ausgebildet. Im Gehäusegrundkörper 26 sind vier Bohrungen 72, insbesondere Durchgangsbohrungen, vorgesehen, welche zusammen mit den Ausnehmungen 36 eine Aufnahme zur Aufnahme von nicht dargestellten Befestigungsmitteln bilden. Die Bohrungen 72 und die Ausnehmungen 36 können vorzugsweise mit jeweils einem gemeinsamen Gewinde ausgebildet sein oder gemäß Fig. 13 und 14 eine nicht dargestellte Sechskantmutter aufweisen. Die Befestigungsmittel können vorzugsweise zur Montage des Antriebsgehäuse 56 und zur Fixierung des Gehäuseteile 30, 32 dienen. Die Haltemittel 70 verhindern ein Aufspreizen des Gehäuseteile 30, 32 unterhalb des Inliners 12 und die Befestigungsmittel des Antriebsgehäuse 56 oberhalb des Inliners 12.

Aufgrund der Mehrteiligkeit kann der Ventilkörper 10 kleiner und leichter ausgebildet sein. Ferner ist der Ventilkörper 10 durch die lösbare Verbindung des ersten Gehäuseteils 30 und zweiten Gehäuseteils 32 wiederverwendbar. Sollte es zu einem Schaden oder Verschleiß am Inliner 12 und/oder am Ventilgehäuse 14, insbesondere am ersten Gehäuseteil 30 und/oder am zweiten Gehäuseteil 32, kann das beschädigte bzw. verschlissene Teil ausgetauscht werden und die restlichen Teil können weiterverwendet werden. Damit ist eine kostengünstige Instandhaltung des Ventilkörpers 10 sichergestellt. Ferner kann in Single-Use-Anwendung der Inliner 12 vom Ventilgehäuse 14 demontiert werden und ein neue Inliner 12 in das Ventilgehäuse 14 eingesetzt werden. Ein Kontakt zwischen dem Fluid und dem Ventilgehäuse 14 und damit eine Kontaminierung des Ventilgehäuses 14 wird durch den Inliner 12 verhindert. Zudem kann der Einsatz von Fluorkunststoffen für chemisch beständige Anwendungen durch die Mehrteiligkeit drastisch reduziert werden, indem nur der Inliner 12 für den Kontakt mit dem Fluid aus Fluorkunststoffen hergestellt werden muss. Das Ventilgehäuse 14 kann aus einem mechanisch stabilen Material hergestellt werden. Die identische Ausbildung des Gehäuseteile 30, 32 bzw. des Gehäusegrundkörpers 26 für verschiedene Montageanschlüsse 28 führt aufgrund des Baukastensystems zu erheblich geringeren Werkzeugkosten.

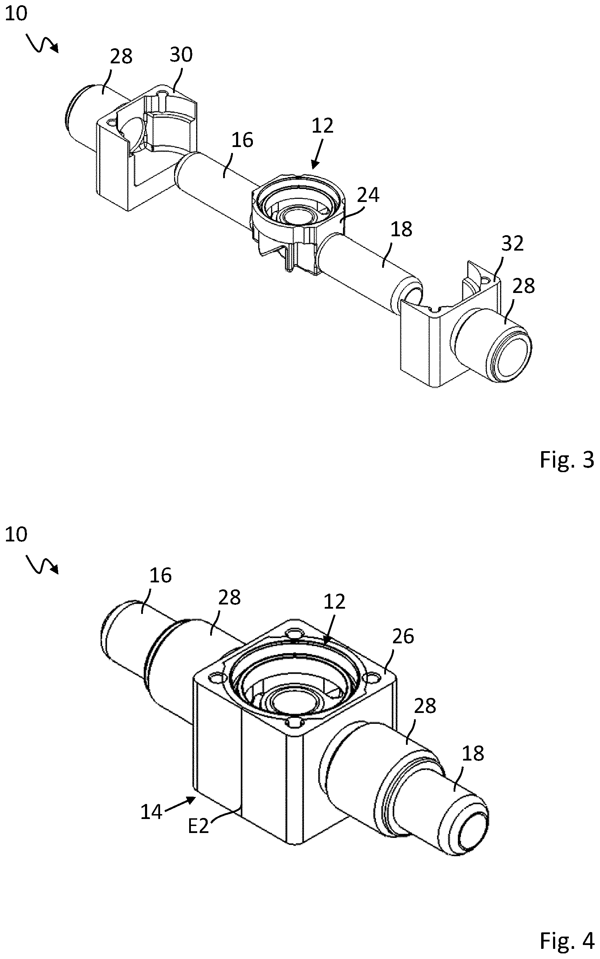

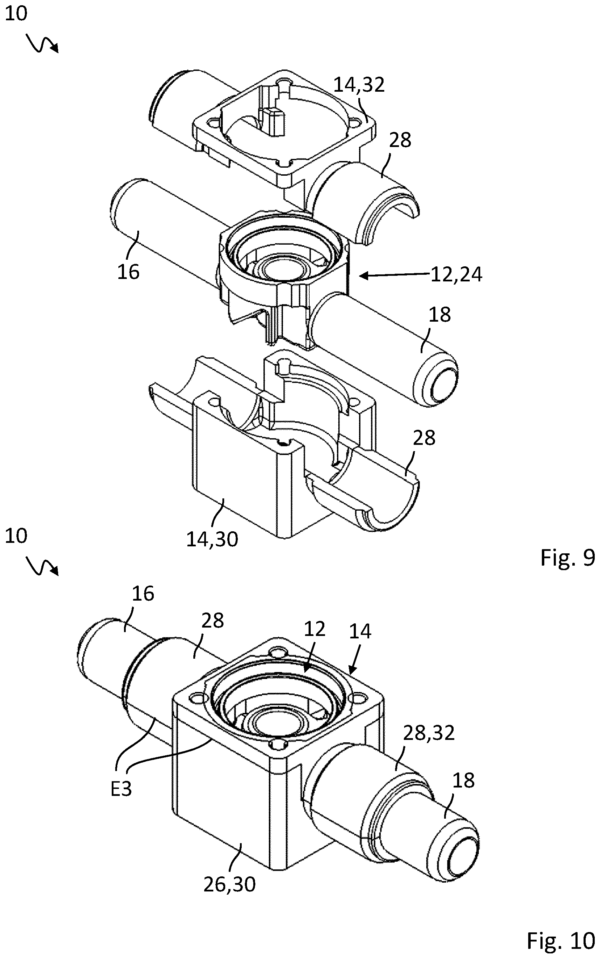

Gemäß Fig. 3 und 4 ist der Ventilkörper 10 entlang einer zweiten Ebene E2 in den ersten Gehäuseteil 30 und den zweiten Gehäuseteil 32 geteilt. Die erste Ebene E2 erstreckt sich parallel zur y-Achse und z-Achse. Zur Montage wird zunächst der Inliner 12 bereitgestellt und anschließend die Gehäuseteile 30, 32 entlang der x-Achse gefügt. Dazu werden die Gehäuseteile 30, 32 auf den ersten Fluidanschluss 16 bzw. den zweiten Fluidanschluss 18 aufgeschoben. Die Gehäuseteile 30, 32 sind vorzugsweise identisch und/oder korrespondierend zueinander ausgebildet. Es können Haltemittel 70 zum Verbinden der Gehäuseteile 30, 32 vorgesehen sein. Ferner können die Gehäuseteile 30, 32 mittels Befestigungsmittel des Antriebsgehäuses 56 fixiert werden, entsprechend der Fig. 1 und 2. Gemäß Fig. 9 und 10 ist der Ventilkörper 10 entlang einer dritten Ebene E3 in den ersten Gehäuseteil 30 und den zweiten Gehäuseteil 32 geteilt. Die dritte Ebene E3 verläuft im Gegensatz zu den Ebenen E1 und E2 nicht eben, sondern stufenförmig. entlang einer Die Gehäuseteile 30, 32 sind vorzugsweise korrespondierend zueinander ausgebildet. Zur Montage wird zunächst der Inliner 12 bereitgestellt und anschließend die Gehäuseteile 30, 32 entlang der y-Achse gefügt. Es können Haltemittel 70 zum Verbinden der Gehäuseteile 30, 32 vorgesehen sein. Ferner können die Gehäuseteile 30, 32 mittels Befestigungsmittel des Antriebsgehäuses 56 fixiert werden, entsprechend der Fig. 1 und 2.

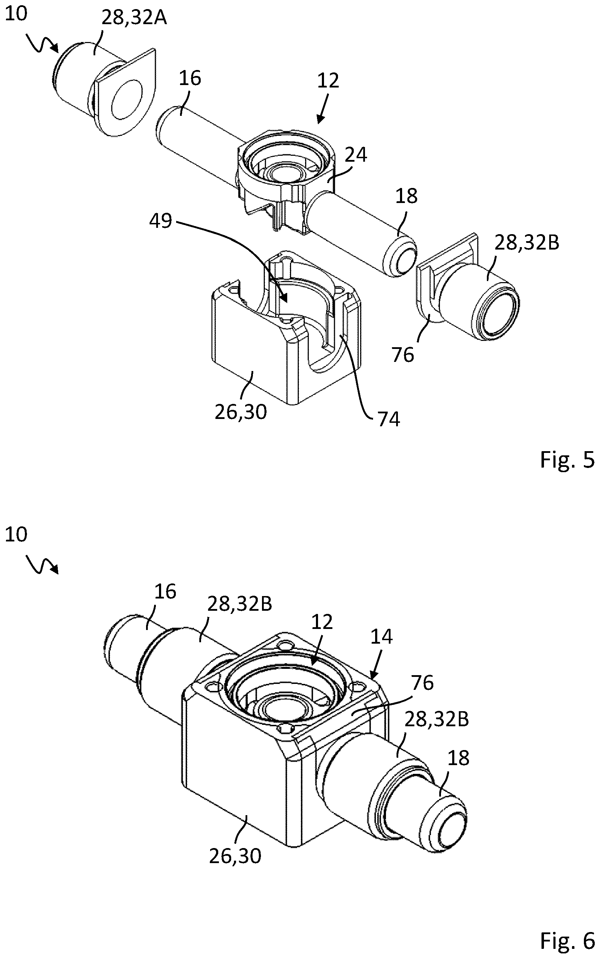

Gemäß Fig. 5 und 6 ist der Ventilkörper 10 in einen ersten Gehäuseteil 30 und zwei zweite Gehäuseteile 32A, 32B geteilt. Der erste Gehäuseteil 30 bildet im Wesentlichen den Gehäusegrundkörper 24. Der erste Gehäuseteil 30 weist zwei vorzugsweise schlitzförmige Montageaufnahmen 74 zur Aufnahme der zweiten Gehäuseteile 32A, 32B auf. Die zweiten Gehäuseteile 32A, 32B bilden im Wesentlichen jeweils einen Montageanschluss 28 und weisen jeweils einen Montageabschnitt 76 auf. Zur Montage des Ventilkörpers 10 gemäß Fig. 5 und 6 werden zunächst die zweiten Gehäuseteile 32A, 32B auf die Fluidanschlüsse 16, 18 entlang der x-Achse aufgeschoben. Anschließend werden der Inliner 12 und zweiten Gehäuseteile 32A, 32B von oben entlang der y-Achse in das erste Gehäuseteil 30 eingesetzt, wobei die Montageabschnitte 76 in die Montageaufnahme 74 eingeführt werden. Mittels der als zweite Gehäuseteile 32A, 32B ausgebildeten Montageanschlüsse 28 können für unterschiedliche Anlagen einfach und schnell unterschiedliche Anschlüsse, insbesondere Montagewinde, bereitgestellt werden. Die zweiten Gehäuseteile 32A, 32B sind vorzugsweise identisch, insbesondere mit Ausnahme des Gewindeabschnitts, ausgebildet.

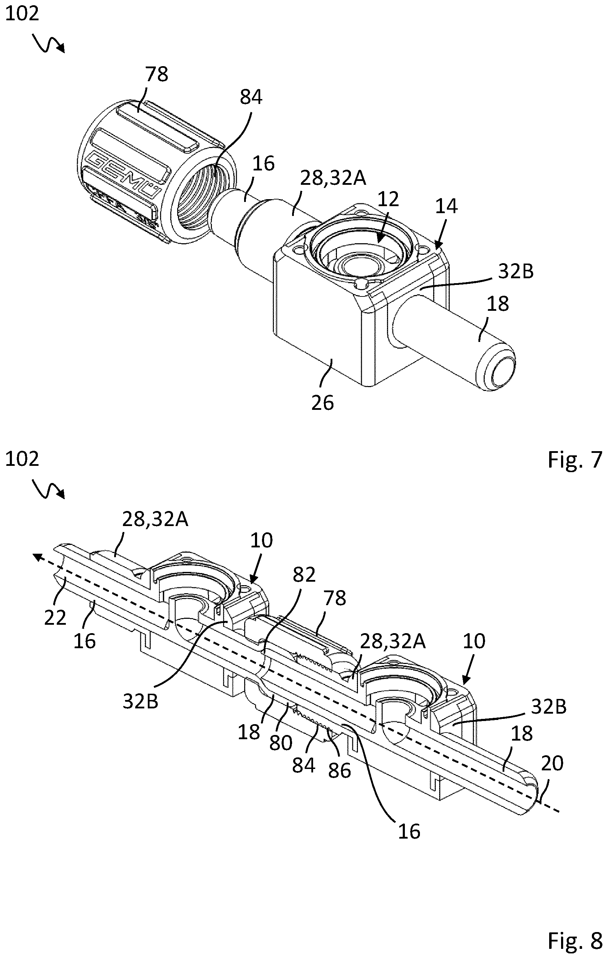

Eine Weiterbildung der Erfindung weist gemäß Fig. 7 und 8 ein System 102 aus wenigstens zwei miteinander verbundenen und/oder hintereinander angeordneten Prozessventilen 100 auf. Die Prozessventile 100 basieren auf dem Ventilkörper 10 gemäß der Fig. 5 und 6. Der dem ersten Fluidanschluss 16 zugeordnete linke zweite Gehäuseteil 32A weist hier einen Montageanschluss 28 und der dem zweiten Fluidanschluss 18 zugeordnete rechte zweite Gehäuseteil 32B weist keinen Montageanschluss 28 auf. Zur Montage der Prozessventile 100 wird der Ventilkörper 10 gemäß Fig. 5 und 6 montiert. Anschließend wird auf den zweiten Fluidanschluss 18 eine zylindrische, hohle Überwurfmutter 78 aufgeschoben. Das freie Ende 80 des zweiten Fluidanschluss 18 wird dann aufgeweitet, sodass sich eine Hinterschneidung bildet, in welcher die Überwurfmutter 78 fixiert ist. In den aufgeweiteten zweiten Fluidanschluss 18 des einen Prozessventils 100 kann der erste Fluidanschluss 16 des benachbarten Prozessventils 100 eingeführt werden. Zum einfacheren Einführen ist am freien Ende des ersten Fluidanschluss 16 und/oder am freien Ende des zweiten Fluidanschluss 18 eine Einführschräge 82 vorgesehen. Anschließend wird ein Innengewinde 84 der Überwurfmutter 78 mit einem Außengewinde 86 des Montageanschlusses 28 verschraubt. Demnach bildet die Überwurfmutter 78 eine Fixierung der Prozessventile 100 sowie eine Abdichtung des Übergangs zwischen den beiden Prozessventilen 100.

## Patentansprüche

1. Ventilkörper (10) für durchströmende Fluide mit einem das Fluid führenden Inliner (12) und mit einem separat zum Inliner (12) ausgebildeten und den Inliner (12) umgebenden Ventilgehäuse (14),
wobei der Inliner (12) umfasst:
- einen ersten Fluidanschluss (16) und einen zweiten Fluidanschluss (18),
- eine zwischen dem ersten Fluidanschluss (16) und dem zweiten Fluidanschluss (18), entlang einer Strömungsrichtung (20) erstreckende Durchgangsleitung (22);
wobei das Ventilgehäuse (14) umfasst:
- wenigstens ein erstes Gehäuseteil (30), und
- separat zum ersten Gehäuseteil (30) ausgebildete zweite Gehäuseteile (32A, 32B), wobei das wenigstens eine erste Gehäuseteil (30) und die zweiten Gehäuseteile (32A, 32B) lösbar miteinander verbunden sind.

2. Ventilkörper (10) nach Anspruch 1, wobei der Inliner (12) aus einem chemisch beständigen Material, insbesondere einem Fluorkunststoff, hergestellt ist.

3. Ventilkörper (10) nach Anspruch 1 oder 2, wobei das Ventilgehäuse (14) aus einem mechanisch hochfesten Kunststoff hergestellt ist.

4. Ventilkörper (10) nach Anspruch 1, 2 oder 3, wobei das wenigstens eine erste Gehäuseteil (30) und die zweiten Gehäuseteile (32A, 32B) mittels einer Clipsverbindung und/oder einer Schraubverbindung und/oder einer Klemmverbindung miteinander lösbar verbunden sind.

5. Ventilkörper (10) nach einem der vorherigen Ansprüche, wobei das Ventilgehäuse (14) einen Gehäusegrundkörper (26) und Montageanschlüsse (28) aufweist.

6. Ventilkörper (10) nach einem der vorherigen Ansprüche, wobei der Inliner (12) einen Ventilabschnitt (24) und wenigstens einen Rohrabschnitt (25) aufweist.

7. Ventilkörper (10) nach einem der vorherigen Ansprüche, wobei das erste Gehäuseteil (30) je zweites Gehäuseteil (32A, 32B) eine Montageaufnahme (70) und die zweiten Gehäuseteile (32A, 32B) jeweils einen mit den Montageaufnahmen (70) zusammenwirkenden Montageabschnitte (76) aufweisen, und
wobei das erste Gehäuseteil (30) einen Gehäusegrundkörper (26) und die zweiten Gehäuseteile (32A, 32B) jeweils einen Montageanschluss (28) bilden.

8. Ventilkörper (10) nach einem der vorherigen Ansprüche, wobei der erste Gehäuseteil (30) je zweites Gehäuseteil (32A, 32B) eine, insbesondere schlitzförmige, Montageaufnahme (74) aufweist.

9. Ventilkörper (10) nach einem der vorherigen Ansprüche, wobei der erste Fluidanschluss (16) und der zweite Fluidanschluss (18) entlang der Strömungsrichtung gegenüberliegend zueinander angeordnet sind, und/oder wobei das Ventilgehäuse (14) entlang der Strömungsrichtung (20) zwischen dem ersten Fluidanschluss (16) und dem zweiten Fluidanschluss (18) angeordnet ist.

10. Ventilkörper (10) nach einem der vorherigen Ansprüche, wobei dieser ferner eine senkrecht zur Durchgangsleitung (22), entlang einer Antriebachse (50) verlaufende Ventilöffnung (49) aufweist, welche durch ein Ventilelement (46), insbesondere eine Plug Membran, abgedichtet ist, wobei das Ventilelement (46) entlang der Antriebsachse (50) zwischen einer Öffnungsstellung zum fluidischen Verbinden und einer Schließstellung zum fluidischen Trennen des ersten Fluidanschlusses (16) und des zweiten Fluidanschlusses (18) verlagerbar ist.

11. Ventilkörper (10) nach einem der vorherigen Ansprüche, wobei ein Sensor zum Erfassen eines Fluidstroms in der Durchgangsleitung (22) im Ventilgehäuse (14) vorgesehen ist.

12. Prozessventil (100) mit einem Ventilkörper (10) nach einem der vorherigen Ansprüche und einem Ventilantrieb (48) zum Verlagern eines im Ventilkörper (10) angeordneten Ventilelements (46) entlang einer Antriebsachse (50).

13. Prozessventil (100) nach Anspruch 12, wobei der Ventilantrieb (46) in einem Antriebsgehäuse (56) angeordnet ist, und wobei das wenigstens eine erste Gehäuseteil (30) und die zweiten Gehäuseteile (32A, 32B) mittels des Antriebsgehäuses (56) miteinander verbunden sind.

14. Prozessventil (100) nach Anspruch 12 oder 13, wobei das Ventilelement (46) einen radialen Dichtabschnitt (54) zum Dichten der Durchgangsleitung (22) gegenüber dem Ventilantrieb (48) aufweist, wobei insbesondere der radiale Dichtabschnitt (54) zwischen dem Ventilgehäuse (14) und dem Antriebsgehäuse (56) angeordnet, vorzugsweise gehalten und/oder verklemmt, ist.

15. Inliner (12) für einen Ventilkörper (10) nach einem der Ansprüche 1 bis 11 zur Anordnung in einem separat zum Inliner (12) ausgebildeten Ventilgehäuse (14) mit einem Ventilabschnitt (24), wenigstens einem Rohrabschnitt (25) und mit wenigstens einem im Ventilabschnitt (24) angeordneten radialen Ventilsitz (40) zum Zusammenwirken mit einem radialen Dichtabschnitt (54) eines Ventilelements (46).

16. Baukasten mit einem als erstes Gehäuseteil (30) ausgebildeten Gehäusegrundkörper (26) für einen Ventilkörper (10) nach einem der Ansprüche 1 bis 11 und mehreren am Gehäusegrundkörper (26) anordenbaren, als zweite Gehäuseteile (32A, 32B) ausgebildeten Montageanschlüssen (28), wobei die Montageanschlüsse (28) jeweils einen Gewindeabschnitt aufweisen und wobei sich die Gewindedurchmesser der Gewindeabschnitte unterscheiden.

17. Verfahren zur Montage eines Ventilkörpers (10) nach einem der Ansprüche 1 bis 11, umfassend die folgenden Schritte:
- Aufschieben der zweiten Gehäuseteile (32A, 32B) auf den Inliner (12),
- Einführen der auf den Inliner (12) aufgeschobenen zweiten Gehäuseteile (32A, 32B) jeweils in eine Montageaufnahme (74) des ersten Gehäuseteils (30).

18. System mit einem primären Ventilkörper (10) nach einem der Ansprüche 1 bis 11 und einem sekundären Ventilkörper (10) nach einem der Ansprüche 1 bis 11, wobei der primäre Ventilkörper (10) und der sekundäre Ventilkörper (10) mittels einer Überwurfmutter (78) verbunden sind.

19. System nach Anspruch 18, wobei ein primärer Fluidanschluss (16, 18) des primären Ventilkörpers (10) einem sekundären Fluidanschluss (16, 18) des sekundären Ventilkörpers (10) zugewandt ist, und wobei der primäre Fluidanschluss (16, 18) des primären Ventilkörpers (10) eine Hinterschneidung zur Befestigung der Überwurfmutter (78) an dem primären Ventilkörper (10) aufweist oder wobei der sekundäre Fluidanschluss (16, 18) des sekundären Ventilkörpers (10) eine Hinterschneidung zur Befestigung der Überwurfmutter (78) an dem sekundären Ventilkörper (10) aufweist.

20. System nach Anspruch 18 oder 19, wobei die Überwurfmutter (78) ein Gewinde (84), insbesondere ein Innengewinde, zur Verschraubung mit einem Gewinde (86), insbesondere einem Außengewinde, eines Montageanschlusses (28) eines Ventilkörpers (10) aufweist.
